Europäisches Patentamt

European Patent Office

Office européen des brevets

(19)

(11) Publication number: **0 455 456 A2**

# EUROPEAN PATENT APPLICATION

(12)

(21) Application number: 91303872.5

(22) Date of filing: 29.04.91

(51) Int. Cl.$^5$: **A01G 31/00, A01N 65/00,**
      **C05F 11/00**

(30) Priority: 02.05.90 JP 115192/90
     26.06.90 JP 165719/90

(43) Date of publication of application:
     06.11.91 Bulletin 91/45

(84) Designated Contracting States:
     DE ES FR GB IT NL

(71) Applicant: Doi, Teruo
     7-3-1 Nishi Shinjuku
     Shinjuku-ku, Tokyo (JP)
     Applicant: Doi, Shuichi
     7-3-1 Nishi Shinjuku
     Shinjuku-ku, Tokyo (JP)
     Applicant: Doi, Yukio
     7-3-1 Nishi Shinjuku
     Shinjuku-ku, Tokyo (JP)

(72) Inventor: Doi, Teruo
     7-3-1 Nishi Shinjuku
     Shinjuku-ku, Tokyo (JP)
     Inventor: Doi, Shuichi
     7-3-1 Nishi Shinjuku
     Shinjuku-ku, Tokyo (JP)

(74) Representative: Dodd, David Michael et al
     c/o Mewburn Ellis, 2 Cursitor Street
     London EC4A 1BQ (GB)

(54) Cultivation material for farm and garden plants.

(57)    A cultivation material for farm and garden
plants comprising a seagrass and/or ash thereof
as a major component. The material is used as a
fertilizer, insecticide and/or germicide.

EP 0 455 456 A2

Jouve, 18, rue Saint-Denis, 75001 PARIS

This invention relates to a cultivation material for farm and garden plants such as a fertilizer, insecticide and/or germicide, which comprises a seagrass.

Many kinds of natural products have been utilized as fertilizers, and many kinds of agricultural chemicals have been utilized as fertilizers, insecticides and germicides. But, seagrasses have never been used as a fertilizer or as an agricultural and horticultural chemical.

The primary object of the present invention is to utilize seagrasses as a fertilizer and as an insecticide and/or germicide to prevent a growth of parasitic fungi and insects on plants, which would damage the plants.

Thus, the present invention provides a cultivation material for farm and garden plants comprising a seagrass and/or ash thereof as a major component.

The cultivation material according to the present invention can be advantageously employed as a fertilizer, insecticide and/or germicide.

The seagrasses usable for the present invention may include *Halophila decipiens, Halophila ovalis, Halophila australis, Ruppia megacarpa, Ruppia tuberosa, Lepilaena cylindrocarpa, Lepilaena preisseii, Lepilaena marina, Posidonia ostenfeldii, Posidonia aff. ostenfeldii, Posidonia sinuosa, Posidonia australis, Posidonia angustifolia, Thalassodendron pachyrhizum, Amphibolis antarctica, Amphibolis griffithii, Heterozostera tasmanica, Zostera mucronata, Zostera muelleri,* and *Zostera capricorni.*

For example, *Pocidonia australis* is found in abundance along the coast of the Australian continent, and according to the investigations by the inventors, has unexpectedly been found to be rich in elements essential for plant growth and to be rich in substances which effectively prevent a growth of parasitic fungi and insects on plants, that would damage the plants. In particular, *Pocidonia australis* has been found to contain various, essential mineral substances for plants, in appropriate proportions suitable for fertilizer: the total ash content of *Pocidonia australis* being 30% in which the amounts of calcium, magnesium and boron are about 20%, 3% and 1%, respectively. In an embodiment of the present invention, *Pocidonia australis* is harvested and is directly used as compost, or as a constituent of fertilizer in a powder form after being dried and pulverized or as ash after being dried and burnt. *Pocidonia australis* is also used as an insecticide and/or germicide in the form of compost, in the form of powder after being dried and pulverized, or in a partially or completely ashed form after being dried and burnt.

Of course, the cultivation material of the present invention can be used together with other useful agricultural chemicals and fertilizers, and if necessary, soil conditioners such as perlite, charcoal, vermiculite and charcoal of rice hulls, which contain silicic acid, can be used in combination therewith.

Especially, charcoal of rice hulls are preferable, as the fungicidal powder of the material is thereby augmented.

The invention will now be illustrated by the following examples. In Examples 1-3, a mixture of 80% by weight of a dry powder of *Pocidonia australis* and 20% by weight of *Pocidonia australis* ash obtained by drying and burning *Pocidonia australis* was used as a fertilizer. In Examples 4-6, a mixture of 30% by weight of partially ashed *Pocidonia australis* (ashing rate of 40%) obtained by drying and incompletely burning *Pocidonia australis* and 30% by weight of charcoal of rice hulls was used as an insecticide and germicide.

Example 1

A fertilizer consisting of the above-mentioned mixture was sprinkled over a tea field (300 g per square meter) every three weeks. After harvesting the tea leaves and making green tea, the taste of the tea was compared to that of tea made of the leaves obtained using a usual fertilizer; the former was remarkably superior to the latter. Furthermore, a chemical analysis of the theanine, tannin and chlorophyll contents indicated that the composition of these substances found in the tea obtained from the tea trees nourished with the fertilizer of the above-mentioned mixture was preferable to that found in a usual tea.

Example 2

A fertilizer consisting of the above-mentioned mixture was sprinkled over a garden (100 g per square meter). The colors of all flowers were enhanced.

Example 3

A fertilizer consisting of the above-mentioned mixture was sprinkled over a spinach field (30 kg per 10 ares). The yield of spinach harvested from the 1,000 m² field was compared to that of spinach harvested from a field using a usual lime-nitrogeneous fertilizer; both the number and weight of spinach leaves from the former field were larger by 25% than those from the latter.

Example 4

An insecticide and germicide consisting of the above-mentioned mixture was sprinkled over a spinach field (100 g per square meter), and without other additional agricultural chemicals, no parasitic insects such as green caterpillars could breed. Moreover, the yield of spinach after harvesting was greatly improved compared to the usual yield.

## Example 5

An insecticide and germicide consisting of the above-mentioned mixture was added to pots for growing a rose flower (10 g per pot) in spring. No damage due to aphicides occurred during summer, even without additional insecticides.

## Example 6

An insecticide and germicide consisting of the above-mentioned mixture was sprinkled over a lawn (50-100 g per square meter). No blight such as large patches, fairy rings and brown patches occurred, even without additional insecticides.

## Claims

1. A plant cultivation material comprising a seagrass and/or ash thereof as a major component.

2. A cultivation material according to claim 1 comprising a mixture of a dried powder of a seagrass and an ash obtainable by drying and burning a seagrass.

3. A cultivation material according to claim 2 in which the ash is obtainable by drying and partially burning a seagrass.

4. A cultivation material according to any one of claims 1 to 3 in which the seagrass comprises Posidonia australis.

5. A cultivation material according to any one of claims 1 to 4 which further comprises at least one soil conditioner.

6. A cultivation material according to claim 5 in which the soil condition is at least one of perlite, charcoal, vermiculite and charcoal of rice hulls.

7. A cultivation material according to claim 6 in which the soil conditioner is charcoal of rice hulls.

8. A fertilizer containing a cultivation material as claimed in any one of claims 1 to 7.

9. An insecticide and/or germicide containing cultivation material as claimed in any one of claims 1 to 7.